# FASCICULE DE BREVET EUROPEEN

(11) **EP 0 697 800 B1**
(45) Date de publication et mention de la délivrance du brevet: **02.11.2005**
(21) Numéro de dépôt: 95401854.5
(22) Date de dépôt: 08.08.1995
(51) Int. Cl.: H04Q 11/00

(54) **Répartiteur optique**
Optische Rangierverteiler
Optical crossconnector

(30) Priorité: 10.08.1994 FR 9409900
(43) Date de publication de la demande: 21.02.1996
(73) Titulaire: FRANCE TELECOM, 75015 Paris (FR)
(72) Inventeur: Tillerot, François, F-29610 Plouigneau (FR); Auffret, René, F-22700 Louannec (FR); Claveau, Georges, F-22450 Camlez (FR)
(74) Mandataire: Poulin, Gérard

(56) Documents cités:
- EP-A- 0 494 831
- EP-A- 0 548 453
- PROCEEDINGS, INTERNATIONAL SWITCHING SYMPOSIUM 1990, 28 MAI-1 JUIN 1990, VOL. 3 PAGES 21-26, STOCKHOLM SE, XP130869 A.M. HILL ET AL 'A Distributed Wavelength Switching Architecture for the TPON Local Network'
- ELECTRONICS LETTERS, vol.28, no.13, 18 Juin 1992, STEVENAGE GB pages 1268 - 1270, XP301528 H. OBARA ET AL 'Star Coupler Based WDM Switch Employing Devices with Reduced Tunability Range'
- PROCEEDINGS OF THE IEEE, vol.81, no.11, Novembre 1993, NEW YORK US, XP421170 C. BAACK ET AL 'Photonics in Future Telecommunications'
- PROCEEDINGS, 19TH EUROPEAN CONFERENCE ON OPTICAL COMMUNICATION, 12-16 SEPT. 1993, VOL. 3 PAGES 73-76, MONTREUX CH, XP492291 B. MIKKELSEN ET AL '20 Gbit/s Polarisation Insensitive Wavelength Conversion in Semiconductor Optical Amplifiers'
- PROCEEDINGS, 19TH EUROPEAN CONFERENCE ON OPTICAL COMMUNICATION, 12-16 SEPT. 1993, VOL. 3 PAGES 60-67, MONTREUX CH, XP492152 K. STUKJAER ET AL 'Semiconductor Optical Amplifiers as Linear Amplifiers, Gates and Wavelength Converters'

## Description

La présente invention concerne un répartiteur optique ("optical crossconnect" dans les articles en langue anglaise).

L'invention s'applique notamment aux réseaux de télécommunications optiques et tout particulièrement aux réseaux à boucles interconnectées et aux réseaux maillés.

La méthode connue la plus simple pour gérer un réseau de télécommunications optiques consiste à affecter à chaque couple (expéditeur, destinataire) une longueur d'onde fixe.

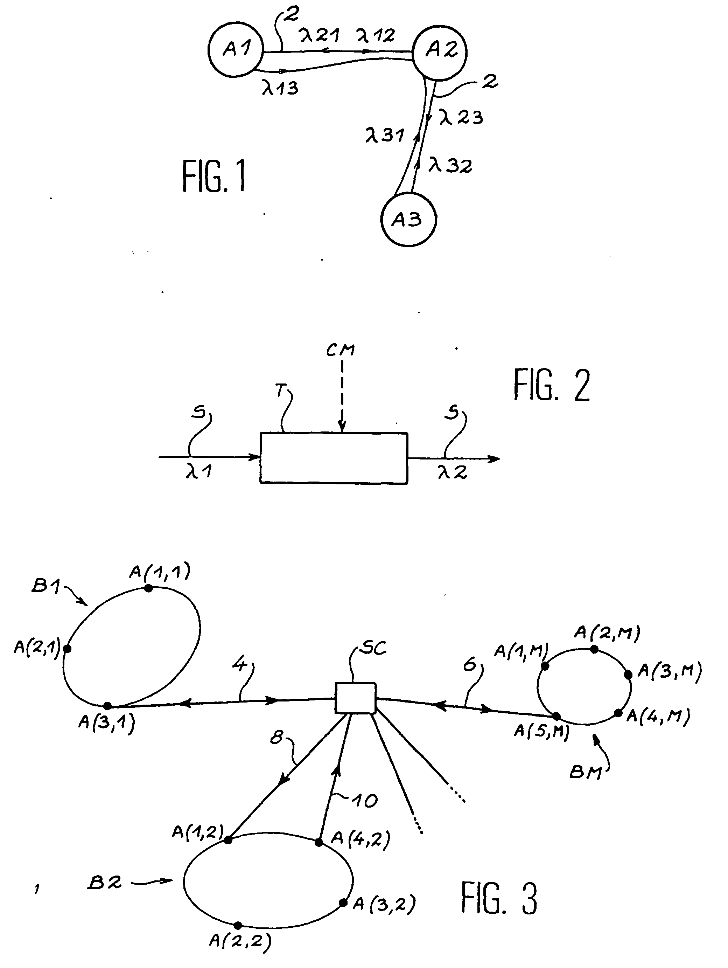

Ceci est schématiquement illustré sur la figure 1 où l'on voit trois noeuds A1, A2, A3 d'un tel réseau qui sont reliés par des fibres optiques 2.

On rappelle qu'un noeud est un endroit où des informations sont insérées et/ou extraites du réseau.

Dans le réseau de la figure 1, une longueur d'onde λij est affectée aux communications du noeud Ai au noeud Aj, où les nombres i et j prennent l'une quelconque des valeurs 1, 2, 3.

Chaque noeud du réseau de la figure 1 peut émettre vers n'importe quel autre noeud, qui utilise, à la réception, un ensemble de filtres optiques appropriés.

Une telle méthode de gestion nécessite un nombre considérable de composants et, avec cette méthode, la bande passante n'est pas répartie de manière reconfigurable.

On peut alors choisir de gérer le trafic des communications dans le réseau en affectant une longueur d'onde aux communications entre deux noeuds du réseau.

On assure dans ce cas une continuité du "trajet" de cette longueur d'onde pendant le transport des informations.

On doit alors choisir une longueur d'onde qui évite la contention (en ce sens où deux informations différentes ne peuvent être transportées à la même longueur d'onde sur un même lien c'est-à-dire sur une même fibre optique reliant deux noeuds du réseau).

Dans le cas où l'on dispose d'un nombre limité de longueurs d'ondes, la contention apparaît rapidement si certains liens du réseau sont surchargés.

L'utilisation de dispositifs de conversion en longueur d'onde ou transpositeurs ("wavelength converters" ou "wavelength shifters" dans les articles en langue anglaise) au niveau des noeuds permet d'augmenter l'efficacité des réseaux de télécommunications optiques.

On connaît de tels dispositifs totalement optiques par les documents suivants :
(1) Broadband Optical Wavelength Shifter, B. Glance et al., CLEO '92, Anaheim, postdeadline paper CPD27, mai 1992.
(2) Semiconductor Optical Amplifiers as Linear Amplifiers, Gates and Wavelength Converters, K. Stubkjaer et al., ECOC '93, Montreux, invited paper TuC5.1, Septembre 1993.
(3) 20 Gbit/s Polarisation insensitive Wavelength Conversion in Semiconductor Optical Amplifiers, B. Mikkelsen et al., ECOC '93, Montreux, postdeadline paper ThP12.6, septembre 1993.

La figure 2 illustre schématiquement un transpositeur totalement optique T.

Un tel transpositeur reçoit en entrée un signal optique modulé S, de longueur d'onde λ1, et fournit en sortie le signal S à une longueur d'onde λ2 différente de λ 1.

On connaît des transpositeurs fixes c'est-à-dire des transpositeurs qui fournissent toujours la même longueur d'onde de sortie.

D'autres transpositeurs connus sont, au contraire, accordables en longueur d'onde.

C'est le cas du transpositeur représenté sur la figure 2 qui, en fonction d'un signal de commande CM, est capable de convertir une longueur d'onde en une autre longueur d'onde choisie dans un ensemble de longueurs d'onde.

On connaît diverses techniques de conversion de longueur d'onde permettant un réglage de la longueur d'onde de sortie par une commande électrique ou une commande optique.

On connaît aussi par le document :
(4) Répartiteur optique, E. Le Coquil et A. Hamel, demande de brevet français n°91 14227 du 19 novembre 1991 = FR-A-2683962
un répartiteur optique qui utilise des transpositeurs optoélectroniques.

Ce répartiteur connu présente l'inconvénient de ne pas être totalement optique.

En effet, le passage d'un signal optique à un signal électronique rompt la continuité du signal à travers le répartiteur.

On connaît également d'autres répartiteurs comprenant des matrices de commutation (commutateurs spatiaux).

Cependant, ces autres répartiteurs connus présentent de nombreux inconvénients liés aux caractéristiques des composants qu'ils comprennent.

En particulier, ces autres répartiteurs connus présentent l'inconvénient d'être dépendant de l'état de polarisation des signaux lumineux incidents.

La présente invention propose un répartiteur optique qui ne présente pas les inconvénients précédents.

Le répartiteur optique objet de l'invention maintient la continuité optique des signaux lumineux incidents et ne dépend pas de l'état de polarisation de ces signaux.

EP-A-0494831 (FUJITSU) décrit des transpositeurs de type électro-optique.

De façon précise, la présente invention a pour objet un répartiteur optique , caractérisé en ce qu'il comprend :
- M moyens optiques de démultiplexage en longueur d'onde, M étant un nombre entier au moins égal à 2, chaque moyen optique de démultiplexage ayant d'une part une entrée destinée à recevoir des signaux optiques d'entrée dont les longueurs d'onde sont distinctes les unes des autres et choisies dans un premier groupe de N longueurs d'onde distinctes les unes des autres, N étant un nombre entier au moins égal à 2, et d'autre part N voies de sortie, ce moyen de démultiplexage étant apte à fournir, sur ces voies de sortie, les signaux optiques démultiplexés,
- des moyens de traitement optique de ces signaux optiques démultiplexés, ces moyens de traitement optique comprenant des moyens de couplage optique, un premier ensemble de moyens de filtrage optique, un deuxième ensemble de moyens de conversion de longueur d'onde totalement optiques et une pluralité de sorties, les moyens d'au moins l'un des premier et deuxième ensembles étant accordables en longueur d'onde, et
- des moyens de gestion prévus pour commander les moyens qui sont accordables en longueur d'onde,
et en ce que les moyens de couplage optique, le premier ensemble de moyens de filtrage optique et le deuxième ensemble de moyens de conversion de longueur d'onde sont prévus pour donner à chaque signal optique d'entrée une longueur d'onde déterminée, choisie dans un deuxième groupe de N longueurs d'onde distinctes les unes des autres, et amener, à l'une des sorties, ce signal optique d'entrée avec cette longueur d'onde déterminée, sous la commande des moyens de gestion.

Le répartiteur optique objet de la présente invention utilise des transpositeurs totalement optiques.

Il s'applique comme on le verra par la suite à différentes structures de réseaux d'interconnexion.

Le répartiteur objet de l'invention permet l'utilisation d'un nombre minimum de longueurs d'ondes et donc d'un nombre minimum de composants optiques, tout en maintenant la continuité optique d'un signal dans tout le réseau.

Selon un premier mode de réalisation particulier du répartiteur objet de l'invention, les moyens de traitement optique comprennent N ensembles de traitement optique, chaque ensemble de traitement optique comprend :
- un coupleur optique principal à M entrées et M sorties,
- M coupleurs optiques auxiliaires comprenant chacun une entrée et M sorties,
- M coupleurs optiques de sortie respectivement associés aux M coupleurs optiques auxiliaires et comprenant chacun M entrées et une sortie, et
- MxM filtres optiques et MxM convertisseurs de longueur d'onde, au moins les filtres optiques étant accordables en longueur d'onde,
dans l'ensemble de traitement optique de rang p, pour tout nombre p allant de 1 à N, l'entrée de rang i du coupleur principal, pour tout nombre i allant de 1 à M, est reliée à la voie de sortie de rang j du moyen de démultiplexage de rang i, où le nombre j parcourt cycliquement l'ensemble des nombres 1 à M à partir du nombre p, les sorties du coupleur principal sont respectivement reliées aux entrées des coupleurs auxiliaires et chaque sortie de chaque coupleur auxiliaire est reliée à une entrée du coupleur de sortie associé par l'intermédiaire de l'un des filtres optiques suivi par l'un des convertisseurs de longueur d'onde.

Selon une première réalisation particulière, chaque convertisseur de longueur d'onde est apte à convertir en une longueur d'onde fixe la longueur d'onde d'un signal optique incident, cette longueur d'onde fixe étant choisie dans le deuxième groupe de N longueurs d'onde.

Selon une deuxième réalisation particulière, chaque convertisseur de longueur d'onde est accordable en longueur d'onde et apte à convertir la longueur d'onde d'un signal optique incident en l'une quelconque des longueurs d'onde du deuxième groupe de N longueurs d'ondes.

Les premiers et deuxièmes groupes de N longueurs d'ondes peuvent être identiques.

Au contraire, les longueurs d'ondes du deuxième groupe de N longueurs d'ondes peuvent être différentes des longueurs d'ondes du premier groupe de N longueurs d'ondes.

Selon un deuxième mode de réalisation particulier du répartiteur objet de l'invention, les moyens de couplage optique comprennent un coupleur optique principal à MxN entrées et MxN sorties et M coupleurs optiques de sortie à N entrées et une sortie, les moyens de filtrage optique sont au nombre de MxN et relient respectivement les sorties du coupleur optique principal aux entrées des coupleurs optiques de sortie, les sorties de ces derniers constituant les sorties des moyens de traitement optique, et les moyens de conversion de longueur d'onde sont au nombre de MxN et relient respectivement les voies de sortie des moyens de démultiplexage aux entrées du coupleur optique principal.

Dans ce cas, dans une première réalisation particulière, les moyens de conversion de longueur d'onde sont accordables en longueur d'onde et les moyens de filtrage optique sont fixes.

Dans une deuxième réalisation particulière, les moyens de conversion de longueur d'onde sont fixes et les moyens de filtrage optique sont accordables en longueur d'onde.

La présente invention sera mieux comprise à la lecture de la description d'exemples de réalisation donnés ci-après, à titre purement indicatif et nullement limitatif, en faisant référence aux dessins annexés sur lesquels :
- la figure 1, déjà décrite, illustre schématiquement des noeuds d'un réseau de télécommunications optiques,
- la figure 2, déjà décrite, illustre schématiquement un transpositeur accordable en longueur d'onde,
- la figure 3 illustre schématiquement un réseau de télécommunications optiques à boucles,
- la figure 4 est une vue schématique d'un premier mode de réalisation particulier du répartiteur totalement optique objet de la présente invention,
- les figures 5A à 5E illustrent schématiquement le fonctionnement d'un répartiteur optique conforme à l'invention,
- la figure 6 illustre schématiquement un réseau maillé de télécommunications optiques, et
- la figure 7 est une vue schématique d'un deuxième mode de réalisation particulier du répartiteur totalement optique objet de la présente invention.

On a représenté schématiquement sur la figure 3 un réseau de télécommunications optiques comprenant un ensemble de M boucles "multicolores" où M est un nombre entier au moins égal à 2.

Chacune de ces boucles comprend un certain nombre de noeuds, chaque noeud étant susceptible d'émettre et/ou de recevoir des informations de la part des autres noeuds du réseau.

Chaque boucle "multicolore" a la topologie physique d'une boucle dans laquelle chaque noeud dispose d'une longueur d'onde (canal) qui lui est propre pour l'émission et la réception d'informations.

Le réseau de la figure 3 est un réseau à gestion centralisée et comprend une station centrale SC pour cette gestion.

Chaque boucle est reliée de façon bidirectionnelle à cette station centrale.

On note chaque noeud du réseau A(j, i), l'indice i correspondant au numéro de la boucle dans laquelle se trouve ce noeud et l'indice j correspondant à la longueur d'onde λj associé à ce noeud.

On voit par exemple sur la figure 3 la boucle B1 qui comporte trois noeuds A(1,1), A(2,1) et A(3,1).

On voit aussi sur la figure 3 un lien 4 (fibre optique) qui relie la station centrale SC à un noeud de la boucle B1 et sur lequel les communications sont bidirectionnelles.

Il en est de même pour la boucle BM, le lien correspondant ayant la référence 6.

Dans le cas de la boucle B2, une fibre optique 8 achemine les communications depuis la station centrale jusqu'à la boucle B2 tandis qu'une autre fibre optique 10 achemine les communications de cette boucle B2 jusqu'à la station centrale.

On note Ni le nombre de noeuds de la boucle i, l'indice i prenant l'une quelconque des valeurs 1 à M.

On note N le plus grand des nombres Ni où i varie de 1 à M, N étant le nombre de longueurs d'ondes permettant de gérer l'ensemble du réseau (N est un nombre entier au moins égal à 2).

On note λi la longueur d'onde affectée, pour l'émission et la réception, au noeud A(i,j) de la boucle Bj.

La station centrale SC comprend un répartiteur optique conforme à l'invention.

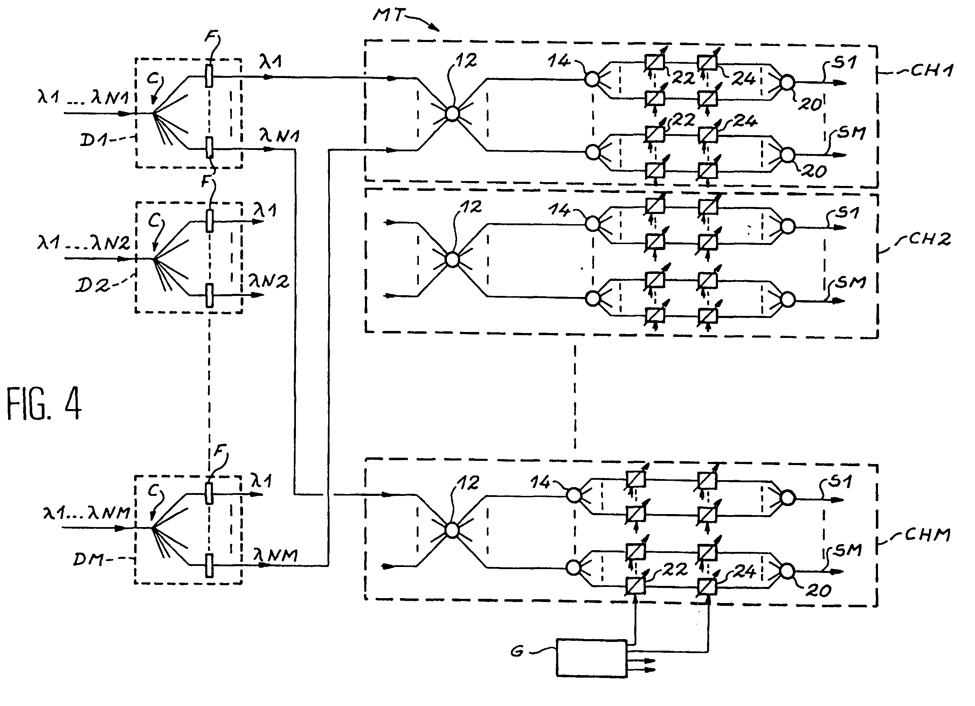

Sur la figure 4, on a représenté schématiquement un mode de réalisation particulier du répartiteur optique objet de l'invention, qui est utilisable dans cette station centrale SC.

Le répartiteur optique conforme à l'invention, qui est schématiquement représenté sur la figure 4, comprend M démultiplexeurs en longueur d'onde D1, D2, ..., DM, qui ont chacun une entrée, d'où au total M entrées qui constituent les entrées du répartiteur.

Ces entrées sont respectivement associées aux boucles et le démultiplexeur Dj (j allant de 1 à M), qui est relié à la boucle Bj, permet de séparer les signaux de longueurs d'ondes λ1, λ2, ..., λNj.

Les signaux ainsi séparés sont disponibles sur Nj voies de sortie parmi les N voies de sortie que comporte le démultiplexeur Dj.

Seules certaines de ces voies de sortie sont représentées sur la figure 4.

Chaque démultiplexeur Dj (j allant de 1 à M) est réalisable au moyen d'un coupleur C à une entrée et N sorties et de N filtres de longueurs d'ondes F qui ne laissent respectivement passer que les longueurs d'ondes λ1, ..., λN.

Il est à noter que, pour Nj<N, les sorties numéros Nj+1 à N d'un démultiplexeur Dj ne servent pas.

Le répartiteur de la figure 4 comprend aussi des moyens MT de traitement optique des signaux démultiplexés.

Ces moyens de traitement optique MT comprennent N couches ou ensembles de traitement optique référencés CH1, CH2, ..., CHN sur la figure 4.

Chaque couche comprend :
- un couple optique principal 12 à M entrées et M sorties,
- M coupleurs optiques auxiliaires 14 à une entrée et M sortie, et
- M coupleurs optiques de sortie 20 à M entrées et une sortie, ces coupleurs 20 étant respectivement associés aux coupleurs 14.

Les sorties du coupleur 12 sont respectivement reliées aux entrées des coupleurs 14.

Chaque sortie de chaque coupleur 14 est reliée à une entrée du coupleur 20 associé à ce coupleur 14, par l'intermédiaire d'un filtre optique accordable 22 suivi par un transpositeur accordable 24.

La lumière issue de cette sortie du coupleur 14 passe ainsi d'abord dans le filtre 22 puis dans le transpositeur 24 puis arrive à l'entrée du coupleur 20.

Chacun des filtres optiques accordables 22 est apte à sélectionner une longueur d'onde parmi les longueurs λ1, λ2, ..., λN qui sont utilisées dans le répartiteur.

Chaque transpositeur totalement optique accordable 24 est apte à convertir une longueur d'onde qui lui parvient en une longueur d'onde choisie parmi ces longueurs d'ondes λ1, λ2, ..., λN.

Chacune des couches CH1, ..., CHN comprend M sorties S1 ... SM respectivement constituées par les sorties des coupleurs 20 de cette couche.

On a ainsi MxN sorties qui constituent les sorties du répartiteur de la figure 4.

On précise que la sortie numéro i de chacune des couches des moyens de traitement optique MT est reliée optiquement à la boucle Bi, i allant de 1 à M.

On explique ci-après les liaisons optiques entre les moyens de traitement optique MT et les démultiplexeurs D1 ... DM du répartiteur de la figure 4.

Pour une plus grande clarté de cette figure 4, seules quelques unes de ces liaisons optiques sont représentées sur cette figure 4.

Pour la couche CH1, l'entrée numéro 1 du coupleur 12 et reliée à la voie de sortie numéro 1 du démultiplexeur D1, l'entrée numéro 2 de ce coupleur 12 est relié à la voie de sortie 2 du démultiplexeur D2, ..., l'entrée numéro M de ce coupleur 12 est reliée à la voie de sortie numéro M du démultiplexeur DM.

Pour la couche CH2, l'entrée numéro 1 de ce coupleur est reliée à la voie de sortie numéro 2 du démultiplexeur D1, l'entrée numéro 2 de ce coupleur 12 est relié à la voie de sortie numéro 3 du démultiplexeur D2, ..., l'entrée numéro M-1 de ce coupleur 12 est reliée à la voie de sortie numéro M du démultiplexeur DM-1 et l'entrée numéro M de ce coupleur 12 est reliée à la voie de sortie numéro 1 du démultiplexeur DM.

De manière générale, pour la couche numéro p, p étant un nombre entier qui prend l'une quelconque des valeurs 1 à N, l'entrée du numéro 1 du coupleur 12 correspondant est reliée à la voie de sortie p du démultiplexeur D1, l'entrée numéro 2 de ce coupleur 12 est reliée à la voie de sortie numéro p+1 du démultiplexeur D2, ..., l'entrée numéro M de ce coupleur 12 est reliée à la voie de sortie numéro p-1 du démultiplexeur DM.

En ce qui concerne toutes ces connexions optiques, on remarque qu'on passe simplement d'une couche à la couche suivante par permutation circulaire des longueurs d'ondes d'entrée.

Le répartiteur de la figure 4 comprend également des moyens de gestion G qui commandent chacun des filtres optiques accordables 22 et chacun des transpositeurs accordables 24.

Plus précisément, étant donné un premier noeud du réseau qui souhaite communiquer avec un deuxième noeud de ce réseau, le premier noeud informe les moyens de gestion G et ceux-ci accordent de façon appropriée les filtres 22 et les transpositeurs 24 de manière que le premier noeud puisse communiquer avec le deuxième noeud par l'intermédiaire du répartiteur.

Considérons par exemple une information émise par un noeud Ai, à la longueur d'onde λi, ce noeud étant dans la boucle Bj du réseau.

Cette information arrive à l'une des couches du répartiteur.

Dans cette couche, le filtre optique accordable correspondant à la boucle destinataire, par exemple notée Bj1, est accordé sur la longueur λi.

Le transpositeur accordable associé à ce filtre accordable est, quant à lui, accordé sur la longueur d'onde du noeud Ai1 qui est destinataire des informations issues du noeud Ai et qui se trouve dans la boucle Bj1.

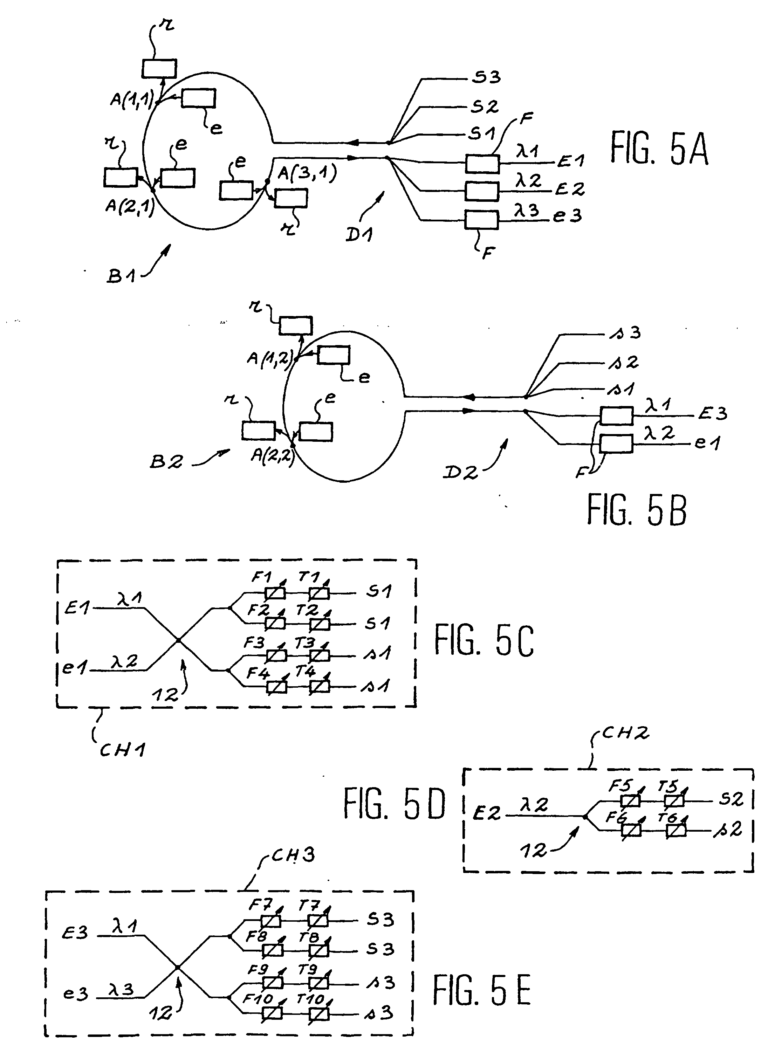

Les figures 5A à 5E illustrent de façon plus détaillée le fonctionnement d'un répartiteur conforme à l'invention, à deux boucles B1 (figure 5A) et B2 (figure 5B).

La boucle B1 comprend trois noeuds A(1,1), A(2,1) et A(3,1).

La boucle B2 comprend deux noeuds A(1,2) et A(2,2).

Dans cet exemple, on utilise trois longueurs d'ondes λ1, λ2 et λ3 pour l'émission et la réception d'informations, N étant ainsi égal à 3 dans le cas présent.

Plus précisément, les noeuds A(1,1) et A(1,2) émettent et reçoivent des informations à la longueur d'onde λ1.

Les noeuds A(2,1) et A(2,2) émettent et reçoivent des informations à la longueur d'onde λ2.

Le noeud A(3,1) émet et reçoit des informations à la longueur d'onde λ3.

Pour chaque noeud, l'émetteur est noté e et le récepteur est noté r.

Le nombre M est égal à 2 dans le cas présent.

Le répartiteur comporte ici trois couches CH1 (figure 5C), CH2 (figure 5D) et CH3 (figure 5E).

On voit sur la figure 5A un démultiplexage aux longueurs d'ondes λ1, λ2 et λ3 et sur la figure 5B, un démultiplexage aux longueurs d'ondes λ1 et λ2.

Les références E1, E2, E3, e1 et e3 permettent de repérer sur les figures 5A à 5E les connexions, après ces démultiplexages, avec les trois couches du répartiteur.

On voit également sur ces figures 5A à 5E la façon dont des sorties S1, S2, S3, s1, s2 et s3 de ces couches sont connectées aux deux boucles.

On voit sur la figure 5C quatre filtres optiques accordables F1 à F4 de la couche CH1 qui sont respectivement associés à quatre transpositeurs accordables T1 à T4 de cette couche.

On voit sur la figure 5D deux filtres optiques accordables F5 et F6 de la couche CH2 qui sont respectivement associés à deux transpositeurs accordables T5 et T6 de cette couche.

On voit sur la figure 5E quatre filtres optiques accordables F7 à F10 de la couche CH3 qui sont respectivement associés à quatre transpositeurs accordables T7 à T10 de cette couche.

On n'a pas représenté sur les figures 5A à 5E les moyens de gestion du répartiteur considéré.

De plus, pour une plus grande clarté des figures 5A à 5E, on n'a pas représenté les éléments inutilisés de ces figures (entrées et/ou sorties de certains coupleurs, certains filtres, certains transpositeurs).

Par exemple, on n'a pas représenté l'une des deux entrées ni l'une des deux sorties du coupleur 12 de la couche CH2.

La troisième voie de sortie du démultiplexeur D2 (associé à la boucle B2) n'est pas non plus représentée.

Supposons par exemple que le noeud A(3,1) envoie un message au noeud A(2,2).

Ce message est émis à la longueur d'onde λ3, circule dans la boucle B1 et arrive au répartiteur dans la couche CH3.

Dans cette couche, il est sélectionné par le filtre F9 de la sortie s3 puis transposé à la longueur d'onde λ2 par le transpositeur T9.

Le signal sort donc sur la sortie s3 à la longueur d'onde λ2 qui correspond au noeud A(2,2), deuxième noeud de la boucle B2.

Pour envoyer un message du noeud A(1,1) au noeud A(2,1), le filtre F3 est accordé sur λ1 et le transpositeur T3 sur λ2.

Pour envoyer un message du noeud A(2,1) au noeud A(1,1), le filtre F1 est accordé sur λ2 et le transpositeur T1 sur λ1.

Pour envoyer un message du noeud A(1,2) au noeud A(3,1,) le filtre F7 est accordé sur λ1 et le transpositeur T7 sur λ3.

Dans le cas d'un réseau à boucles dont chaque noeud contient, pour la réception des informations, un filtre accordable en longueur d'onde (commandé par les moyens de gestion), il est possible d'utiliser un répartiteur plus simple que celui de la figure 4 en remplaçant, dans le répartiteur de cette dernière, les transpositeurs accordables par des transpositeurs fixes qui sont réglés sur des longueurs d'ondes fixes.

On peut également réaliser un autre répartiteur conforme à l'invention dans lequel les filtres 22 de la figure 4 sont encore accordables sur les longueurs d'ondes λ1 à λN mais les transpositeurs 24 sont accordables sur des longueurs d'ondes Λ1 à AN différentes des longueurs d'ondes λ1 à λN, d'où deux fois plus de longueurs d'ondes que dans le cas de la figure 4.

Cet autre répartiteur est utilisable avec un réseau à boucles dans lequel les noeuds émettent des informations à des longueurs d'ondes choisies dans l'ensemble λ1 à λN et reçoivent des informations à des longueurs d'ondes choisies dans l'ensemble Λ1 à ΛN.

Ceci permet de simplifier la réalisation d'un réseau à boucles dont chaque noeud est à la fois émetteur et récepteur.

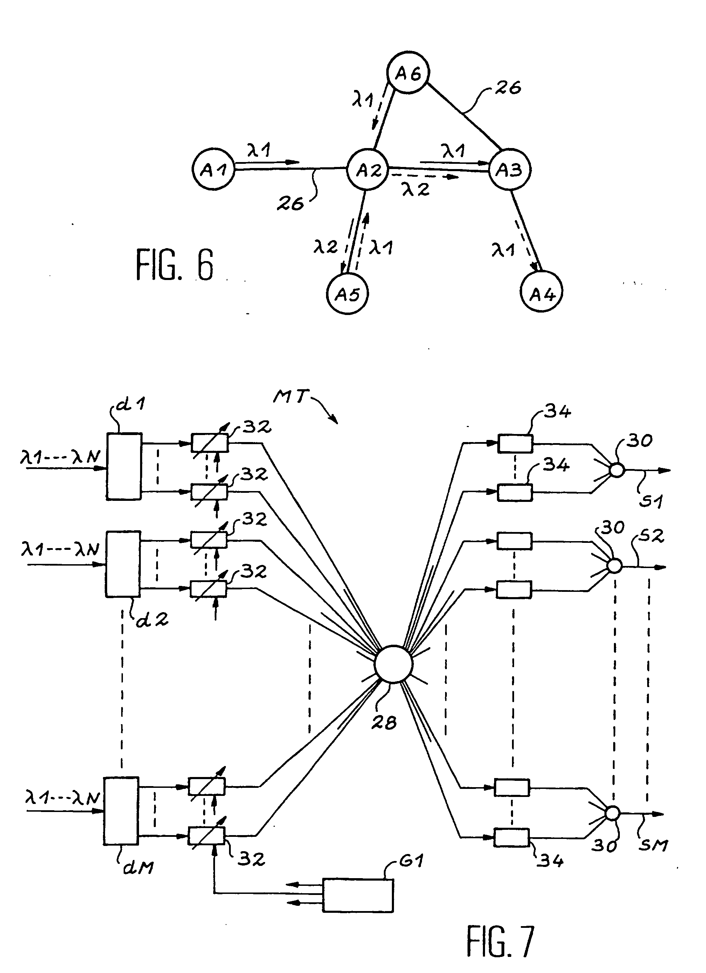

On a représenté schématiquement sur la figure 6 un autre réseau de télécommunications optiques qui constitue un réseau maillé.

Ce réseau comprend six noeuds A1 à A6.

On voit également sur la figure 6 les liens (fibres optiques) référencés 26 qui permettent de relier les noeuds les uns aux autres.

On voit que le noeud A1 est relié par un tel lien au noeud A2 qui est lui-même relié au noeud A3, A5 et A6 par de tels liens.

Le noeud A3 est quant à lui relié au noeud A6 et au noeud A4.

Pour la communication entre les divers noeuds du réseau, on utilise un ensemble de longueurs d'ondes λ1 à λN et lorsque deux noeuds veulent communiquer, on affecte des longueurs d'ondes appropriées aux liens permettant de passer d'un noeud à l'autre.

On indique ci-après un algorithme permettant d'affecter des longueurs d'ondes à une transmission entre deux noeuds Ai et Aj du réseau, où i et j sont, dans l'exemple considéré, choisis parmi les nombres 1 à 6, i étant différent de j.

Le réseau maillé de la figure 6 comporte aussi des moyens de gestion non représentés sur la figure 6 mais portant la référence G1 sur la figure 7.

Lorsque ces moyens de gestion sont informés d'une communication à établir entre les noeuds Ai et Aj, ils déterminent un chemin physique entre ces noeuds Ai et Aj et affectent des longueurs d'ondes aux divers liens de ce chemin.

Les longueurs d'ondes sont attribuées avec l'algorithme suivant :

Pour chaque lien Ap - Ap+1, p allant de 0 à K-1, avec A0=Ai et AK=Aj,
- on donne à un indice k la valeur 1
- si λk est déjà utilisé sur le chemin, on remplace k par k+1, sinon on affecte λk au lien
- on retourne à la ligne précédente jusqu'à ce qu'une longueur d'onde soit attribuée au lien.

Un exemple d'application de cet algorithme est représenté sur la figure 6 et utilise deux longueurs d'ondes λ1 et λ2.

Pour une communication du noeud A1 vers le noeud A3, on va du noeud A1 au noeud A2 avec la longueur d'onde λ1 et du noeud A2 au noeud A3 avec cette longueur d'onde λ1.

Pour une communication du noeud A5 vers le noeud A4, on va du noeud A5 au noeud A2 avec la longueur d'onde λ1, du noeud A2 au noeud A3 avec la longueur d'onde λ2 et du noeud A3 au noeud A4 avec la longueur d'onde λ1.

Pour une communication du noeud A6 vers le noeud A5, on va du noeud A6 au noeud A2 avec la longueur d'onde λ1 et du noeud A2 au noeud A5 avec la longueur d'onde λ2.

Pour établir ces diverses communications, on peut utiliser des répartiteurs optiques conformes à l'invention, du genre de celui qui est schématiquement représenté sur la figure 7.

Un répartiteur de ce genre est placé dans chacun des noeuds du réseau maillé, d'où 6 répartiteurs dans le cas de la figure 6.

Comme on le verra mieux par la suite, ce répartiteur comprend des éléments (filtres optiques ou transpositeurs) qui sont accordables en longueur d'onde.

Les moyens de gestion G1 du réseau sont alors prévus pour commander de façon appropriée ces éléments accordables afin d'établir les communications souhaitées entre les noeuds du réseau.

Chaque noeud est muni d'un émetteur et d'un récepteur d'informations qui ne sont pas représentés sur la figure 6.

Le répartiteur conforme à l'invention, qui est schématiquement représenté sur la figure 7, est destiné à être placé dans un noeud d'un réseau maillé, ce noeud étant muni de M-1 liens qui le relient à M-1 autres noeuds du réseau maillé.

Dans l'exemple de la figure 6, le nombre M est égal à 5 pour le noeud A2 du réseau.

Le répartiteur de la figure 7 comprend M démultiplexeurs de longueurs d'ondes d1, d2, ..., dM, chaque démultiplexeur ayant une entrée et N voies de sortie.

Les entrées des démultiplexeurs d1, d2, ... dM-1 sont respectivement reliées aux liens aboutissant au noeud dans lequel se trouve ce répartiteur.

Ces entrées reçoivent des signaux optiques dont les longueurs d'ondes sont choisies dans l'ensemble des N longueurs d'ondes λ1 à λN.

Chaque démultiplexeur fournit, sur ses voies de sortie, des signaux optiques démultiplexés.

La voie numéro 1 de ce démultiplexeur fournit un signal à la longueur d'onde λ1, la voie numéro 2 un signal à la longueur d'onde λ2 ... et la voie numéro N un signal à la longueur d'onde λN.

De tels démultiplexeurs sont réalisables à l'aide de coupleurs optiques et de filtres optiques comme on l'a vu plus haut dans le cas de la figure 4.

L'entrée du démultiplexeur dM est réservée à l'insertion d'informations issues du noeud dans lequel se trouve le répartiteur.

Le répartiteur de la figure 7 comprend également :
- un coupleur optique 28, à MxN entrées et MxN sorties,
- M coupleurs optiques de sortie 30, à N entrées et une sortie,
- MxN transpositeurs totalement optiques accordables 32, et
- MxN filtres optiques fixes 34.

Chacun des transpositeurs 32 est commandé par les moyens de gestion G1 et capable de transformer la longueur d'onde d'un signal optique incident en une longueur d'onde choisie parmi les longueurs d'ondes λ1 à λN.

Les sorties respectives S1, S2, ..., SM des coupleurs optiques 30 constituent les M sorties du répartiteur de la figure 7.

Les sorties S1, S2, ..., SM-1 sont respectivement reliées optiquement, par des moyens non représentés, aux liens qui relient le noeud dans lequel se trouve le répartiteur aux M-1 autres noeuds.

La sortie SM est réservée à l'extraction des informations destinées à ce noeud.

Comme on le voit sur la figure 7, les entrées du coupleur optique principal 28 sont respectivement reliées aux MxN voies de sortie des divers multiplexeur d1 à dM par l'intermédiaire des MxN transpositeurs accordables 32.

Comme on le voit également sur la figure 7, les N entrées de chaque coupleur optique 30 sont respectivement reliées à N sorties du coupleur optique principal 28 par l'intermédiaire de N filtres optiques fixes 34.

On précise que les N filtres optiques fixes associés à chaque coupleur 30 ne laissent respectivement passer que les longueurs d'ondes λ1 à λN.

Dans l'exemple de la figure 7, les longueurs d'ondes souhaitées sur les diverses sorties du répartiteur sont sélectionnées en accordant les transpositeurs 32.

On obtient, en variante, un autre répartiteur conforme à l'invention en remplaçant les transpositeurs 32 par des transpositeurs fixes et les filtres optiques 34 par des filtres optiques accordables en longueur d'onde.

Dans cet autre répartiteur, les N transpositeurs associés à chaque démultiplexeur convertissent la longueur d'onde d'un signal incident respectivement en les longueurs d'ondes λ1 à λN.

De plus, dans cet autre répartiteur, chacun des filtres optiques est accordable pour sélectionner une longueur d'onde souhaitée parmi les longueurs d'ondes λ1 à λN et ce filtre est bien entendu commandé par les moyens de gestion du réseau.

Ces moyens de gestion sélectionnent les longueurs d'ondes souhaitées sur les diverses sorties de cet autre répartiteur en accordant ces filtres accordables.

On voit que des répartiteurs du genre de celui de la figure 7, placés dans les noeuds du réseau maillé, permettent effectivement la mise en oeuvre de l'algorithme mentionné plus haut.

Des répartiteurs du genre de celui de la figure 7 (ou de la variante de celui-ci) permettent la gestion dynamique d'un réseau maillé.

Mais de tels répartiteurs permettent également de configurer un réseau maillé à des instants séparés par des intervalles de temps grands devant la durée des messages à transmettre par ce réseau.

On dispose alors de répartiteurs totalement optiques, qui sont transparents aux signaux utilisés (signaux de type SDH pour "Synchronous Digital Hierarchy" ou signaux plésiochrones par exemple).

## Revendications

1. Répartiteur optique, comprenant:
- M moyens optiques (D1...DM ; d1...dM) de démultiplexage en longueur d'onde, M étant un nombre entier au moins égal à 2, chaque moyen optique de démultiplexage ayant d'une part une entrée destinée à recevoir des signaux optiques d'entrée dont les longueurs d'onde sont distinctes les unes des autres et choisies dans un premier groupe de N longueurs d'onde distinctes les unes des autres, N étant un nombre entier au moins égal à 2, et d'autre part N voies de sortie, ce moyen de démultiplexage étant apte à fournir, sur ces voies de sortie, les signaux optiques démultiplexés,
- des moyens (MT) de traitement optique de ces signaux optiques démultiplexés, ces moyens de traitement optique comprenant des moyens de couplage optique (12, 14, 20 ; 28, 30), un premier ensemble de moyens de filtrage optique (22 ; 34), un deuxième ensemble de moyens (24 ; 32) de conversion de longueur d'onde totalement optiques et une pluralité de sorties (S1... SM), les moyens d'au moins l'un des premier et deuxième ensembles étant accordables en longueur d'onde, et
- des moyens de gestion (G, G1) prévus pour commander les moyens qui sont accordables en longueur d'onde,
et en ce que les moyens de couplage optique, le premier ensemble de moyens de filtrage optique et le deuxième ensemble de moyens de conversion de longueur d'onde sont prévus pour donner à chaque signal optique d'entrée une longueur d'onde déterminée, choisie dans un deuxième groupe de N longueurs d'onde distinctes les unes des autres, et amener, à l'une des sorties, ce signal optique d'entrée avec cette longueur d'onde déterminée, sous la commande des moyens de gestion (G, G1), les moyens de traitement optique étant prévus pour brasser les signaux démultiplexés avant d'effectuer une opération de transposition en longueur d'onde ou pour transposer en longueur d'onde les signaux démultiplexés puis combiner ceux-ci par les moyens de couplage optique puis sélectionner les signaux par des moyens de filtrage optique fixes.

2. Répartiteur selon la revendication 1, **caractérisé en ce que** les moyens (MT) de traitement optique comprennent N ensembles de traitement optique (CH1...CHN), **en ce que** chaque ensemble de traitement optique comprend :
- un coupleur optique principal (12) à M entrées et M sorties,
- M coupleurs optiques auxiliaires (14) comprenant chacun une entrée et M sorties,
- M coupleurs optiques de sortie (20) respectivement associés aux M coupleurs optiques auxiliaires et comprenant chacun M entrées et une sortie, et
- MxM filtres optiques (22) et MxM convertisseurs de longueur d'onde (24), au moins les filtres optiques étant accordables en longueur d'onde,
**en ce que**, dans l'ensemble de traitement optique de rang p, pour tout nombre p allant de 1 à N, l'entrée de rang i du coupleur principal, pour tout nombre i allant de 1 à M, est reliée à la voie de sortie de rang j du moyen de démultiplexage de rang i, où le nombre j parcourt cycliquement l'ensemble des nombres 1 à M à partir du nombre p, **en ce que** les sorties du coupleur principal (12) sont respectivement reliées aux entrées des coupleurs auxiliaires (14) et **en ce que** chaque sortie de chaque coupleur auxiliaire est reliée à une entrée du coupleur de sortie associé (20) par l'intermédiaire de l'un des filtres optiques suivi par l'un des convertisseurs de longueur d'onde.

3. Répartiteur selon la revendication 2, **caractérisé en ce que** chaque convertisseur de longueur d'onde est apte à convertir en une longueur d'onde fixe la longueur d'onde d'un signal optique incident, cette longueur d'onde fixe étant choisie dans le deuxième groupe de N longueurs d'onde.

4. Répartiteur selon la revendication 2, **caractérisé en ce que** chaque convertisseur de longueur d'onde (24) est accordable en longueur d'onde et apte à convertir la longueur d'onde d'un signal optique incident en l'une quelconque des longueurs d'onde du deuxième groupe de N longueurs d'onde.

5. Répartiteur selon l'une quelconque des revendications 2 à 4, **caractérisé en ce que** les premier et deuxième groupes de N longueurs d'onde sont identiques.

6. Répartiteur selon l'une quelconque des revendications 2 à 4, **caractérisé en ce que** les longueurs d'onde du deuxième groupe de N longueurs d'onde sont différentes des longueurs d'onde du premier groupe de N longueurs d'onde.

7. Répartiteur selon la revendication 1, **caractérisé en ce que** les moyens de couplage optique comprennent un coupleur optique principal (28) à MxN entrées et MxN sorties et M coupleurs optiques de sortie (30) à N entrées et une sortie, **en ce que** les moyens de filtrage optique (34) sont au nombre de MxN et relient respectivement les sorties du coupleur optique principal (28) aux entrées des coupleurs optiques de sortie (20), les sorties de ces derniers constituant les sorties des moyens de traitement optique, et **en ce que** les moyens de conversion de longueur d'onde (32) sont au nombre de MxN et relient respectivement les voies de sortie des moyens de démultiplexage (d1...dM) aux entrées du coupleur optique principal (28).

8. Répartiteur selon la revendication 7, **caractérisé en ce que** les moyens de conversion de longueur d'onde (32) sont accordables en longueur d'onde et **en ce que** les moyens de filtrage optique (34) sont fixes.

9. Répartiteur optique selon la revendication 7, **caractérisé en ce que** les moyens de conversion de longueur d'onde sont fixes et **en ce que** les moyens de filtrage optique sont accordables en longueur d'onde.

## Patentansprüche

1. Optischer Verteiler, der umfasst:
- M optische Mittel (D1, ..., DM; d1, ..., dM) zur Demultiplexierung nach der Wellenlänge, wobei M eine ganze Zahl größer oder gleich 2 ist, wobei jedes optische Demultiplexierungsmittel einerseits einen Eingang besitzt, der dazu bestimmt ist, optische Eingangssignale zu empfangen, deren Wellenlängen voneinander verschieden und aus einer ersten Gruppe von N voneinander verschiedenen Wellenlängen gewählt sind, wobei N eine ganze Zahl größer oder gleich 2 ist, und andererseits N Ausgangswege besitzt, wobei dieses Demultiplexierungsmittel auf diesen Ausgangswegen die demultiplexierten optischen Signale liefern kann,
- Mittel (MT) zur optischen Verarbeitung dieser demultiplexierten optischen Signale, wobei diese Mittel zur optischen Verarbeitung Mittel zur optischen Kopplung (12, 14, 20; 28, 30), eine erste Gesamtheit optischer Filtermittel (22; 34), eine zweite Gesamtheit vollständig optischer Wellenlängenumsetzungsmittel (24; 32) und mehrere Ausgänge (S1, ..., SM) umfassen, wobei die Mittel der ersten und/oder der zweiten Gesamtheit hinsichtlich der Wellenlänge abstimmbar sind, und
- Steuerungsmittel (G, G1), die dazu vorgesehen sind, die Mittel, die hinsichtlich der Wellenlänge abstimmbar sind, zu steuern,
wobei die Mittel zur optischen Kopplung, die erste Gesamtheit von Mitteln zur optischen Filterung und die zweite Gesamtheit von Mitteln zur Wellenlängenumsetzung dazu vorgesehen sind, jedem optischen Eingangssignal eine bestimmte Wellenlänge zu verleihen, die aus einer zweiten Gruppe von N voneinander verschiedenen Wellenlängen gewählt ist, und unter der Steuerung der Steuerungsmittel (G, G1) an einen der Ausgänge dieses optische Eingangssignal mit dieser bestimmten Wellenlänge zu liefern, wobei die Mittel zur optischen Verarbeitung dazu vorgesehen sind, die demultiplexierten Signale zu mischen, bevor eine Transpositionsoperation hinsichtlich der Wellenlänge, ausgeführt wird, oder die demultiplexierten Signale hinsichtlich der Wellenlänge zu transponieren, dann diese Signale durch die Mittel zur optischen Kopplung zu kombinieren und dann die Signale durch die festen Mittel zur optischen Filterung auszuwählen.

2. Verteiler nach Anspruch 1, **dadurch gekennzeichnet, dass** die Mittel (MT) zur optischen Verarbeitung N Gesamtheiten (CH1, ..., CHN) zur optischen Verarbeitung umfassen, dass jede Gesamtheit zur optischen Verarbeitung umfasst:
- einen optischen Hauptkoppler (12) mit M Eingängen und M Ausgängen,
- M optische Hilfskoppler (14), die jeweils einen Eingang und M Ausgänge umfassen,
- M optische Ausgangskoppler (20), die den M optischen Hilfskopplern entsprechend zugeordnet sind und jeweils M Eingänge und einen Ausgang umfassen und
- M × M optische Filter (22) und M × M Wellenlängenumsetzer (24),
wobei wenigstens die optischen Filter hinsichtlich der Wellenlänge abstimmbar sind,
dass in der Gesamtheit zur optischen Verarbeitung mit Rang p für jede Zahl p im Bereich von 1 bis N der Eingang mit Rang i des Hauptkopplers für jede Zahl i im Bereich von 1 bis M mit dem Ausgangsweg mit Rang j des Demultiplexierungsmittels mit Rang i verbunden ist, wobei die Zahl j die Gesamtheit der Zahlen 1 bis M beginnend bei der Zahl p zyklisch durchläuft, dass die Ausgänge des Hauptkopplers (12) mit entsprechenden Eingängen der Hilfskoppler (14) verbunden sind und dass jeder Ausgang jedes Hilfskopplers mit einem Eingang des zugeordneten Ausgangskopplers (20) über eines der optischen Filter, gefolgt von einem der Wellenlängenumsetzer, verbunden ist.

3. Verteiler nach Anspruch 2, **dadurch gekennzeichnet, dass** jeder Wellenlängenumsetzer die Wellenlänge eines einfallenden optischen Signals in eine feste Wellenlänge umsetzen kann, die aus der zweiten Gruppe von N Wellenlängen gewählt ist.

4. Verteiler nach Anspruch 2, **dadurch gekennzeichnet, dass** jeder Wellenlängenumsetzer (24) hinsichtlich der Wellenlänge abstimmbar ist und die Wellenlänge eines einfallenden optischen Signals in irgendeine Wellenlänge der zweiten Gruppe von N Wellenlängen umsetzen kann.

5. Verteiler nach einem der Ansprüche 2 bis 4, **dadurch gekennzeichnet, dass** die erste und die zweite Gruppe von N Wellenlängen gleich sind.

6. Verteiler nach einem der Ansprüche 2 bis 4, **dadurch gekennzeichnet, dass** die Wellenlängen der zweiten Gruppe von N Wellenlängen von den Wellenlängen der ersten Gruppe von N Wellenlängen verschieden sind.

7. Verteiler nach Anspruch 1, **dadurch gekennzeichnet, dass** die Mittel zur optischen Kopplung einen optischen Hauptkoppler (28) mit M × N Eingängen und M × N Ausgängen sowie M optische Ausgangskoppler (30) mit N Eingängen und einem Ausgang umfassen, dass die Mittel (34) zur optischen Filterung in der Anzahl M × N vorhanden sind und die Ausgänge des optischen Hauptkopplers (28) mit den entsprechenden Eingängen der optischen Ausgangskoppler (20) verbinden, wobei die Ausgänge dieser letzteren die Ausgänge der Mittel zur optischen Verarbeitung bilden, und dass die Mittel (32) zur Wellenlängenumsetzung in der Anzahl M × N vorliegen und die Ausgangswege der Demultiplexierungsmittel (d1, ..., dM) mit den entsprechenden Eingängen des optischen Hauptkopplers (28) verbinden.

8. Verteiler nach Anspruch 7, **dadurch gekennzeichnet, dass** die Wellenlängenumsetzungsmittel (32) hinsichtlich der Wellenlänge abstimmbar sind und dass die Mittel (34) zur optischen Filterung fest sind.

9. Optischer Verteiler nach Anspruch 7, **dadurch gekennzeichnet, dass** die Wellenlängenumsetzungsmittel fest sind und dass die Mittel zur optischen Filterung hinsichtlich der Wellenlänge abstimmbar sind.

## Claims

1. Optical crossconnect, comprising:
- M wavelength demultiplexing optical means (D1...Dm; d1...dM), M being a whole number equal at least to 2, each optical demultiplexing device having firstly one input for receiving optical input signals whose wavelengths are distinct from one another and selected from a first group of N wavelengths distinct from one another, N being a whole number equal at least to 2, and secondly by N output channels, this demultiplexing device being able to provide on these output channels the demultiplexed optical signals,
- means (MT) for optically processing these demultiplexed optical signals, said means including optical coupling means (12, 14, 20; 28, 30), a first set of optical filtering means (22; 34), a second set of fully optical wavelength conversion means (24; 32) and plurality of outputs (S1...SM), the means of at least one of the first and second sets being wavelength-tunable, and
- management means (G, G1) provided to control the wavelength-tunable means, and in that the optical coupling means, the first set of optical filtering means and the second set of wavelength conversion means are provided to give each optical input signal a specific wavelength selected from a second group of N wavelengths distinct from one another and bring to one of the outputs this optical input signal with this specific wavelength under the control of the management means (G, G1), and the optical processing means crossconnecting the demultiplexed signals before effecting a wavelength shifting operation or for the wavelength shifting of the demultiplexed signals, followed by the combining thereof by optical coupling means, followed by the selection of the signals by fixed optical filtering means.

2. Optical crossconnect according to claim 1, **characterized in that** the optical processing means (MT) include N optical processing sets (CH1...CHN),
**in that** each optical processing set comprises:
- one main optical coupler (12) with M inputs and M outputs,
- M auxiliary optical couplers (14), each including one input and M outputs,
- M optical output couplers (20) associated respectively with M auxiliary optical couplers and each including M inputs and one output, and
- MxM optical filters (22) and MxM wavelength converters (24), at least the optical filters being wavelength-tunable,
**in that** in the optical processing set of row p for any number p ranging from 1 to N, the input of row i of the main coupler for any number i ranging from 1 to M is connected to the output channel of row j of the demultiplexing device of row i where the number j cyclically traverses all the numbers 1 to M from the number p, wherein the outputs of the main coupler (12) are respectively connected to the inputs of the auxiliary couplers (14) and wherein each output of each auxiliary coupler is connected to one input of associated output coupler (20) by means of one of the optical filters followed by one of the wavelength converters.

3. Optical crossconnect according to claim 2, **characterized in that** each wavelength converter is able to convert into a fixed wavelength the wavelength of an incident optical signal, this fixed wavelength being selected from the second group of N wavelengths.

4. Optical crossconnect according to claim 2, wherein each wavelength converter (24) is wavelength-tunable and able to convert the wavelength of an incident optical signal into any one of the wavelengths of the second group of N wavelengths.

5. Optical crossconnect according to any one of the claims 2 to 4, **characterized in that** the first and second groups of N wavelengths are identical.

6. Optical crossconnect according to any one of the claims 2 to 4, **characterized in that** the wavelengths of the second group of N wavelengths are different from the wavelengths of the first group of N wavelengths.

7. Optical crossconnect according to claim 1, **characterized in that** the optical coupling means include a main optical coupler (28) with MxN inputs and MxN outputs and M optical output couplers (30) with N inputs and one output, **in that** the number of the optical filtering means (34) is MxN and respectively connect the outputs of the main optical coupler (28) to the inputs of the optical output couplers, the outputs of the latter constituting the outputs of the optical processing means, and **in that** the number of the wavelength conversion means (32) is MxN and respectively connect the output channels of the demultiplexing means to the inputs of the main optical coupler.

8. Optical crossconnect according to claim 7, **characterized in that** the wavelength conversion means (32) are wavelength-tunable and **in that** the optical filtering means (34) are fixed.

9. Optical crossconnect according to claim 7, **characterized in that** the wavelength conversion means are fixed and **in that** the optical filtering means are wavelength-tunable.
